# EUROPÄISCHE PATENTSCHRIFT

(11) **EP 2 948 396 B1**
(45) Veröffentlichungstag und Bekanntmachung des Hinweises auf die Patenterteilung: **12.07.2017**
(21) Anmeldenummer: 14708783.7
(22) Anmeldetag: 27.01.2014
(51) Int. Cl.: B65G 49/06, B65D 19/44, B65D 85/48, A47B 57/00, A47B 96/04, B62B 3/10

(54) **VORRICHTUNG MIT SCHWENKBAREN FÄCHERN**
APPARATUS WITH ROTATIONABLE RACKS
APPAREIL AVEC SUPPORTS ORIENTABLES

(30) Priorität: 28.01.2013 AT 592013
(43) Veröffentlichungstag der Anmeldung: 02.12.2015
(73) Patentinhaber: LISEC Austria GmbH, 3353 Seitenstetten (AT)
(72) Erfinder: KRONSTEINER, Alexander, 3372 Blindenmarkt (AT); GÜNTHER, Walter, 3340 Waidhofen/Ybbs (AT)
(74) Vertreter: Beer & Partner Patentanwälte KG
(86) Internationale Anmeldenummer: PCT/AT2014/000015
(87) Internationale Veröffentlichungsnummer: WO 2014/113828

(56) Entgegenhaltungen:
- EP-A1- 1 612 161
- DE-A1- 4 405 782
- DE-U1- 29 904 562
- US-A- 4 976 092
- US-A- 6 135 294

## Beschreibung

Die Erfindung betrifft eine Vorrichtung mit den Merkmalen des einleitenden Teils von Anspruch 1.

Vorrichtungen mit Fächern (Fächerwagen, Fächergestelle) sind an sich bekannt. In diesem Zusammenhang kann beispielsweise auf die AT 394 987 B, AT 401 258 B, EP 0 603 151 A, EP 0 770 756 A, EP 0 816 265 A und US 7,182,559 B1 verwiesen werden.

Bekannt ist auch ein Fächerwagen, der eine Reihe von durch Stäbe voneinander getrennte Fächer zur Aufnahme von im wesentlichen lotrecht stehend gelagerten Glasscheiben, die mit ihrer Unterkante auf Gleitflächen oder Rollen des Fächerwagens aufstehen, aufweist. Bei diesem bekannten Fächerwagen (oder falls er ohne Räder ausgebildet ist, "Fächergestell" oder "Fächerspeicher") sind die Fächer bildenden Stäbe in Rahmen angebracht und zueinander parallel verlaufend ausgerichtet. Bekannt ist es auch, dass die Fächer bildenden und begrenzenden Stäbe in Gebrauchslage des Fächerwagens zu lotrechten Ebenen geneigt sind, sodass auch die von den Stäben begrenzten Fächer zu lotrechten Ebenen geneigt sind und die plattenförmigen Gegenstände, wie beispielsweise Glasscheiben, die in den Fächern abgestellt sind, zur Lotrechten (beispielsweise um 5°) geneigt stehen.

Bei bekannten Fächerwagen sind wenigstens die einlaufseitigen, Fächer begrenzenden Stäbe zur vom Grundgestell des Fächerwagens definierten Ebene schräggestellt, sodass beim Einschieben eines plattenförmigen Gegenstandes dieser zuerst mit seiner unteren, bezogen auf die Förderrichtung vorderen Ecke (und nicht mit seinem ganzen, vorderen Rand) zwischen zwei benachbarte, ein Fach begrenzende Stäbe eintritt.

Bei bekannten Fächerwagen ist auch vorgeschlagen worden, die Rahmen in entgegengesetzte Richtungen schräg zu stellen. So kann vorgesehen sein, dass die endständigen Rahmen aufeinander zu, also in entgegengesetzte Richtungen schräg gestellt sind, damit plattenförmige Gegenstände, wie Glasscheiben, von beiden Seiten her so eingeschoben werden können, wie dies zuvor beschrieben worden ist, nämlich derart, dass, die bezogen auf die Förderrichtung vordere, untere Ecke des plattenförmigen Gegenstandes als erstes in ein Fach eintritt.

Das aus der DE 27 04 834 A1 bekannte Transportgestell für Glasscheiben weist zwei "Wände" auf, die am Grundgestell um Achsen verschwenkbar sind. Die Wände begrenzen keine "Fächer". Vielmehr sind an den Wänden um in oberen Bereich der Wände vorgesehene Achsen verschwenkbare Glasträger angebracht. Die Lage der Glasträger wird durch Eingriff von Stiften in Löcher im Grundgestell festgelegt. An einem Grundgestell verschwenkbare Rahmen zeigt die DE 27 04 834 A1 nicht.

Die EP 1 612 161 A betrifft kein Lagergestell mit Fächern, sondern eine Vorrichtung zum Aufrichten eines Paketes aus Glasscheiben aus einer horizontalen Lage in eine vertikale Lage. Hiezu sind verschwenkbare Hebe-Arme vorgesehen. Auch in Fig. 7 der EP 1 612 161 A ist nur eine Anordnung aus mehreren Lagerstätten gezeigt, die mehrere aufgerichtete Glaspakete tragen.

Die AU 633572 B zeigt ein Lagergestell für Glasscheiben, wobei einzelne Träger auf Rollen in das Gestell hinein und wieder heraus bewegt werden können. Irgendwelche Hinweise auf ein Schwenken der Träger sind nicht geoffenbart.

Bei dem aus der JP H11192953 A bekannten Fächerwagen sind die die Fächer begrenzenden Rahmen in Löcher im Boden des Grundgestelles gesteckt. Daher sind die Rahmen nicht schwenkbar.

Die US 7,182,559 B1 zeigt ein zusammenklappbares Lagergestell für Glasscheiben bei dem zwei Rahmen mit Fächer bildenden Stäben von einer liegenden in eine aufrechte Position verschwenkt werden können. Die Stäbe in den Rahmen nehmen zu den Schwenkachsen jedoch rechte und keine spitzen Winkel ein.

Bekannt sind mit Fächern ausgestattete Vorrichtungen. Bei diesen werden die Fächer von rahmen- oder plattenförmigen Bauteilen begrenzt. Diese Bauteile können wie aus der DE 44 05 782 A1, der DE 299 04 562 U1, der US 4,976,092 A und der US 6,135,294 A bekannt, zum Ändern von Größe, Form und Ausrichtung der von ihnen begrenzten Fächer verschwenkt und verstellt werden. Verschwenkbare Bauteile in Vorrichtungen zum Bilden von Glaspaketen sind aus der EP 1 612 161 A1 bekannt.

Problematisch bei den bekannten Fächerwagen/Fächergestellen ist es, dass die Rahmen, in welchen Fächer begrenzende Stäbe vorgesehen (gespannt) sind, am Grundgestell starr angeordnet sind. So ist es nicht möglich, die Fächerwagen/Fächergestelle an die jeweils gegebenen Verhältnisse anzupassen.

Aufgabe der Erfindung ist es, eine Vorrichtung der eingangs genannten Gattung so weiterzubilden, dass sie flexibler ist und ohne Weiteres an die jeweils gegebenen Verhältnisse angepasst werden kann.

Gelöst wird diese Aufgabe erfindungsgemäß mit einer Vorrichtung, welche die Merkmale von Anspruch 1 aufweist.

Bevorzugte und vorteilhafte Ausgestaltungen der Erfindung sind Gegenstand der Unteransprüche.

Da bei der erfindungsgemäßen Vorrichtung (Fächerwagen oder Fächergestell) wenigstens einer der Rahmen, vorzugsweise aber mehrere der Rahmen, in welchen Fächer begrenzende Stäbe vorgesehen sind, gegenüber dem Grundgestell verschwenkbar (kippbar) sind, besteht die Möglichkeit, die Ausrichtung der Fächer begrenzenden Stäbe an die jeweils gegebenen Verhältnisse, insbesondere an die Art und Größe der einzuschiebenden plattenförmigen Gegenstände (beispielsweise Glasscheiben, Isolierglas) anzupassen.

Die Möglichkeit, die Rahmen mit den Fächer bildenden Stäben zu verschwenken (zu kippen), erlaubt es auch, die Vorrichtung mit plattenförmigen Gegenständen (Glasscheiben), unabhängig von ihrer Größe und Form, wahlweise von der einen oder von der anderen Seite her zu beschicken, da es jeweils möglich ist, die Rahmen so auszurichten, dass der einzuschiebende Gegenstand die Fächer begrenzenden Stäbe aller Rahmen zuerst mit seiner bezogen auf die Förderrichtung vorderen, unteren Ecke passiert, wenn er in ein Fach eintritt.

Für das Verschwenken der die Fächer bildenden und begrenzenden Stäbe haltenden Rahmen kann ein motorischer Antrieb vorgesehen sein, oder die Rahmen werden einfach von Hand aus in die jeweils gewünschte Richtung verschwenkt.

In Betracht gezogen ist im Rahmen der Erfindung, dass das Verschwenken der Rahmen mit den Fächer bildenden Stäben auf einen bestimmten Verschwenkbereich begrenzt ist. Dieser Verschwenkbereich kann durch Arretierungspositionen unterteilt sein, sodass innerhalb des Verschwenkbereiches die jeweils gewünschte Position (Schrägstellung des Rahmens mit Fächer begrenzenden Stäben) gewählt werden kann.

Die Möglichkeit, bei der erfindungsgemäßen Vorrichtung Rahmen mit Fächer bildenden und begrenzenden Stäben zu verschwenken, erlaubt es auch, die Ausrichtung der Fächer bildenden Stäbe während des Beschickungs- und des Entladevorganges zu verändern, um die für den jeweiligen Arbeitsvorgang optimale Stellung der Stäbe zu gewährleisten.

Weitere Einzelheiten und Merkmale der Erfindung ergeben sich aus der nachstehenden Beschreibung eines bevorzugten Ausführungsbeispieles anhand der Zeichnungen. Es zeigt:

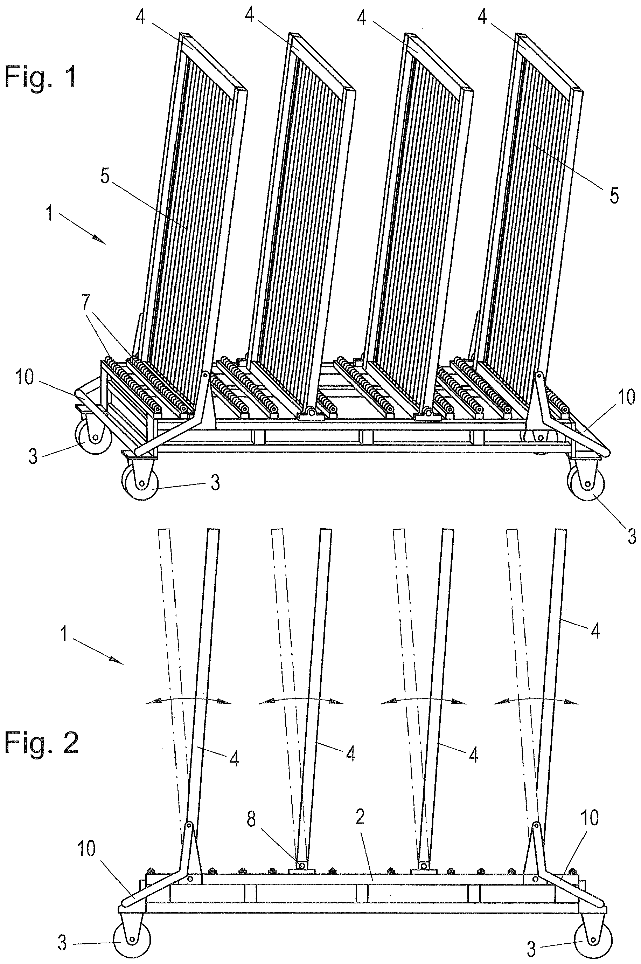

- Fig. 1: einen Fächerwagen, der in Schrägansicht dargestellt ist,
- Fig. 2: schematisiert den Fächerwagen aus Fig. 1 in Seitenansicht,
- Fig. 3: den Fächerwagen aus Fig. 1 von links der Fig. 1 aus gesehen und
- Fig. 4: eine Einzelheit des Fächerwagens aus Fig. 1.

Ein Fächerwagen 1 besitzt ein Grundgestell 2, an dem im gezeigten Ausführungsbeispiel vier Lenkrollen 3 vorgesehen sind. Die Lenkrollen 3 sind nicht vorgesehen, wenn es sich um ein Fächergestell handelt, das ortsfest steht und beispielsweise mit Hilfe eines Transportmittels (Gabelstapler oder dgl.) verfahren werden kann.

Im gezeigten Ausführungsbeispiel sind in dem Fächerwagen 1 vier Rahmen 4 vorgesehen, die vom Grundgestell 2 des Fächerwagens 1 nach oben abstehen. In den Rahmen 4 sind mehrere zueinander parallel ausgerichtete Stäbe 5 (oder Seile) vorgesehen, die voneinander Abstand aufweisen und so Fächer für die Aufnahme von plattenförmigen Gegenständen, beispielsweise Glasscheiben, bilden.

Über die Stäbe 5 können Röhrchen (nicht gezeigt) gesteckt sein, die gegenüber den Stäben 5 frei drehbar sind, um die Reibungskräfte zwischen dem einzuschiebenden plattenförmigen Gegenstand und den Stäben 5, welche die Fächer begrenzen, klein zu halten. Derartige Röhrchen sind aus der AT 401 258 B an sich bekannt.

Die Fächer sind unten durch Gleitflächen oder Rollen 7 begrenzt, sodass die mit ihren unteren, horizontalen Rändern auf den Gleitflächen oder Rollen 7 aufstehenden, plattenförmigen Gegenstände mit geringem Kraftaufwand eingeschoben werden können.

Bei dem Fächerwagen 1 sind die Rahmen 4, welche die Stäbe 5 halten, am Grundgestell 2 um horizontale Achsen 8 verschwenkbar. Die Achsen 8 sind zur Ebene der Rahmen 4 parallel und liegen bevorzugt in der Ebene der Rahmen 4. Das Verschwenken der Rahmen 4 kann von Hand aus oder aber durch einen (nicht gezeigten) Antrieb erfolgen, wobei das Verschwenken aller Rahmen 4 gemeinsam oder aber das Verschwenken jedes der Rahmen 4 unabhängig von anderen Rahmen 4 möglich ist.

In Betracht gezogen ist bei der Erfindung auch, den Verschwenkbereich der Rahmen 4 zu begrenzen, sodass die Rahmen 4 lediglich innerhalb des vorgegebenen Verschwenkbereiches hin und her geschwenkt (gekippt) werden können.

Die an beiden Enden des Fächerwagens 1 angeordneten Bügel 10 sind Griffe, die dazu dienen, den Fächerwagen 1 von Hand aus zu bewegen.

In Betracht gezogen ist es weiters, insbesondere im Verschwenkbereich Rastpositionen für verschiedene Schrägstellungen ("Arretierungspositionen") der Rahmen 4 vorzusehen. Alternativ kann eine Einrichtung vorgesehen sein, mit der die Rahmen 4 in jeder gewünschten Schräglage arretiert werden können.

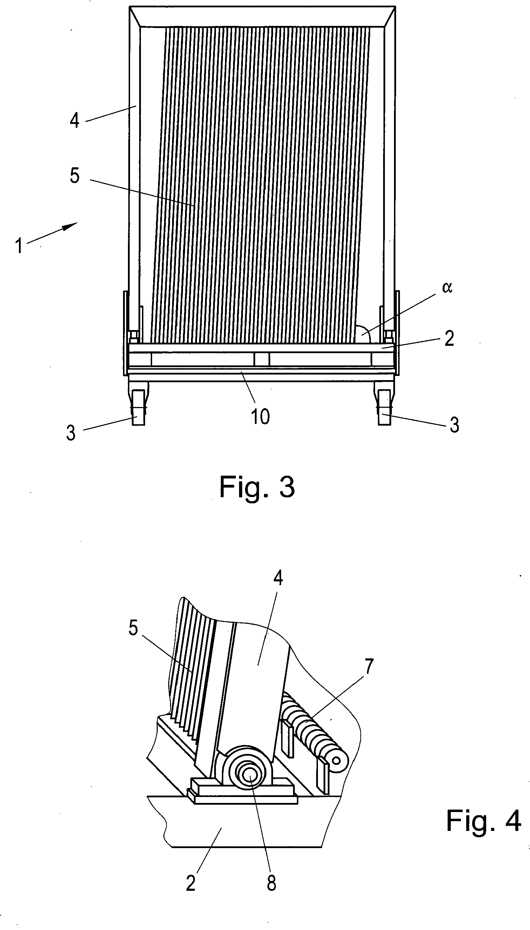

Wie in Fig. 3 gezeigt, sind die Fächer begrenzenden Stäbe 5 bei rechteckigen Rahmen 4 zur Achse 8 schief ausgerichtet (sie schließen mit der Achse 8 einen spitzen Winkel α ein). So begrenzen die Stäbe 5 Fächer, die zur Lotrechten und zur Ebene des Grundgestells 2 unter einem spitzen Winkel α stehen, z.B. zur Lotrechten um 5° geneigt sind.

Bei der Erfindung ist auch in Betracht gezogen, die Rahmen 4 nicht rechteckig, sondern parallelogramartig auszubilden, sodass die Stäbe 5 und damit die Fächer zu lotrechten Ebenen um wenige Grad (beispielsweise um 5°) geneigt sind. In diesem Fall sind die Fächer bildenden Stäbe 5 gegenüber zum Grundgestell 2 senkrechten Ebenen, die quer zu den Rahmen 4 mit Fächer bildenden Stäben 5 verlaufen, schräg gestellt, d.h. sie schließen mit den Achsen 8 schiefe Winkel ein. Derartige, zur Lotrechten schräg gestellte Fächer sind in bestimmten Fällen bevorzugt, da dann die in den Fächern aufgenommenen Gegenstände an den "unteren" Stäben 5, die Fächer begrenzen, anliegen und so eine definierte Lage einnehmen.

In Betracht gezogen ist bei der Erfindung auch, dass die Rahmen 4 mit den Stäben 5 durch gelenkig ausgebildete, den Achsen 8 gegenüberliegende Ecken und gelenkige Verbindungen der Seiten des Rahmens 4 mit den Achsen 8 so ausgebildet sind, dass sie von ihrer rechteckigen Form in eine parallelogrammartige Form und zurück verstellt werden können, sodass die jeweils gewünschte Ausrichtung der Fächer lotrecht (= senkrecht zur Ebene des Grundrahmens) oder schräg gestellt (= zur Lotrechten geneigt) ausgerichtet werden können. So kann erreicht werden, dass die von den Stäben 5 begrenzten Fächer eine Ausrichtung haben, die der - zur Vertikalen geneigten - Förderebene von plattenförmigen Gegenständen, insbesondere Glasscheiben in Anlagen zum Herstellen von Isolierglas, entsprechen. Wenn Rahmen 4 parallelogrammartig verformt werden, ändert sich der Winkel, den die seitlichen Seiten der Rahmen 4 und dessen Stäbe 5 mit der Achse 8 einschließen.

Die Möglichkeit, den Rahmen 4 parallelogrammartig zu verformen, erlaubt es auch, die Änderung der Ausrichtung der von zur Achse 8 unter einem schiefen Winkel ausgerichteten Stäbe 5 gebildeten Fächer, also deren Schrägstellung, zu ändern.

Da sich die Lage der von zur Achse 8 "schiefen" Stäben 5 (vgl. Fig. 3) gebildeten Fächer beim Schwenken der Rahmen 4 um die Achse 8 ändert, kann auch bei starren Rahmen 4 allein durch Schwenken derselben die Ausrichtung der Fächer (zur Lotrechten mehr oder weniger stark geneigt) geändert werden.

Beim Schwenken eines Rahmens 4 oder einzelner Rahmen 4 kann bei parallelogrammartig verformbaren Rahmen 4 die Verformbarkeit des/der Rahmen 4 dazu dienen, die Änderung der Ausrichtung der von den Stäben 5 des Rahmens 4 gebildeten Fächer so zu ändern, dass diese Fächer mit den übrigen (nicht geschwenkten) Rahmen 4 auch nach dem Schwenken des Rahmens 4 fluchten.

Die Lage von Fächer begrenzenden Stäben 5, um diese beispielsweise aus einer zur Achse 8 normalen Ausrichtung in eine zur Achse 8 schräge Ausrichtung zu verstellen, kann auch dadurch erfolgen, dass ein Rahmen 4 um eine zu seiner Ebene quer ausgerichtete, beispielsweise in der Höhe des Grundgestells 2 liegende, Achse geschwenkt wird. Durch ein derartiges Schwenken eines Rahmens 4 oder einzelner Rahmen 4 kann die Ausrichtung der Stäbe 5 jedes Rahmens 4 relativ zur Achse 8 geändert werden, ohne dass der Rahmen 4 selbst aus einer rechteckigen Form in eine parallelogrammartige Form (oder umgekehrt) verstellt wird.

Zusammenfassend kann ein Ausführungsbeispiel der Erfindung wie folgt beschrieben werden:
Eine als Fächerwagen oder Fächergestell ausgebildete Vorrichtung mit Fächern für die Aufnahme von plattenförmigen Gegenständen (Glasscheiben) besitzt ein Grundgestell 2, an dem nach oben abstehend mehrere Rahmen 4 angeordnet sind. Jeder der Rahmen 4 enthält Stäbe 5, die im Rahmen 4 zueinander parallel und mit Abstand voneinander angeordnet sind. Die Stäbe 5 begrenzen Fächer für die Aufnahme der Gegenstände in der Vorrichtung 1. Die Rahmen 4 mit Fächer begrenzenden Stäben 5 sind am Grundgestell 2 schwenkbar gelagert, wobei die Schwenkachsen 8 am unteren Ende der Rahmen 4 im Bereich des Grundgestells 2 angeordnet sind. Die Gegenstände, die in Fächern, die von den Stäben 5 in den Rahmen 4 begrenzt werden, aufgenommen sind, stehen unten, also mit ihren unteren horizontalen Rändern, auf Gleitflächen oder Rollen 7 auf.

## Patentansprüche

1. Vorrichtung mit Fächern für die Aufnahme plattenförmiger Gegenstände, wie Glasscheiben, mit Fächer bildenden, in Rahmen (4) angeordneten, zueinander parallelen Stäben (5) und mit einem Grundgestell (2), an dem die Rahmen (4) mit Fächer bildenden Stäben (5) in Gebrauchslage nach oben abstehend angeordnet sind, wobei wenigstens einzelne der Rahmen (4) mit den Fächer bildenden Stäben (5) zum Grundgestell (2) schräg ausgerichtet sind, und wobei wenigstens einer der Rahmen (4) mit Fächer bildenden Stäben (5) am Grundgestell (2) schwenkbar gelagert ist, **dadurch gekennzeichnet, dass** die Fächer bildenden Stäbe (5) gegenüber zur Ebene des Grundgestells (2) senkrechten Ebenen, die quer zu den Rahmen (4) mit Fächer bildenden Stäben (5) verlaufen, schräg gestellt sind und mit der Achse (8), um welche Rahmen (4) verschwenkbar sind, spitze Winkel (α) einschließen.

2. Vorrichtung nach Anspruch 1, **dadurch gekennzeichnet, dass** die Achse (8), um die der wenigstens eine Rahmen (4) mit Fächer bildenden Stäben (5) schwenkbar ist, im Bereich des Grundgestells (2) liegt.

3. Vorrichtung nach Anspruch 1 oder 2, **dadurch gekennzeichnet, dass** Rahmen (4) mit Fächer bildenden Stäben (5) voneinander unabhängig schwenkbar sind.

4. Vorrichtung nach einem der Ansprüche 1 bis 3, **dadurch gekennzeichnet, dass** der wenigstens eine Rahmen (4) mit Fächer bildenden Stäben (5) in vorbestimmten Stellungen festlegbar ist.

5. Vorrichtung nach einem der Ansprüche 1 bis 4, **dadurch gekennzeichnet, dass** der wenigstens eine Rahmen (4) mit Fächer bildenden Stäben (5) mit einem Verstellantrieb gekuppelt ist.

6. Vorrichtung nach einem der Ansprüche 1 bis 5, **dadurch gekennzeichnet, dass** zwei oder mehr als zwei Rahmen (4) mit Fächer bildenden Stäben (5) um gleiche Winkel verschwenkbar sind.

7. Vorrichtung nach Anspruch 6, **dadurch gekennzeichnet, dass** die Rahmen (4) mit Fächer bildenden Stäben (5) mit einem gemeinsamen Verstellantrieb gekuppelt sind.

8. Vorrichtung nach einem der Ansprüche 1 bis 5, **dadurch gekennzeichnet, dass** zwei oder mehr als zwei Rahmen (4) mit Fächer bildenden Stäben (5) um voneinander unterschiedliche Winkel verschwenkbar sind.

9. Vorrichtung nach einem der Ansprüche 1 bis 8, **dadurch gekennzeichnet, dass** am Grundgestell (2) auf dessen in Gebrauchslage unteren, den Rahmen (4) mit Fächer bildenden Stäben (5) gegenüberliegenden Seite Räder oder Rollen, insbesondere Lenkrollen (3), vorgesehen sind.

10. Vorrichtung nach einem der Ansprüche 1 bis 9, **dadurch gekennzeichnet, dass** zwei oder mehr als zwei Rahmen (4) mit Fächer bildenden Stäben (5) vorgesehen sind, die nach unterschiedlichen Seiten hin zum Grundgestell (2) schräg ausgerichtet sind.

11. Vorrichtung nach einem der Ansprüche 1 bis 10, **dadurch gekennzeichnet, dass** die Fächer bildenden Stäbe (5) Gleitstäbe sind.

12. Vorrichtung nach einem der Ansprüche 1 bis 11, **dadurch gekennzeichnet, dass** die Fächer bildenden Stäbe (5) zwischen einer Stellung, in der sie zur Achse (8), um welche Rahmen (4) mit Fächer bildenden Stäben (5) verschwenkbar sind, senkrecht ausgerichtet sind und einer Stellung, in der die Fächer bildenden Stäbe (5) zur Achse (8), um welche Rahmen (4) mit Fächer bildenden Stäben (5) verschwenkbar sind, schräg gestellt sind, verstellbar sind.

13. Vorrichtung nach einem der Ansprüche 1 bis 12, **dadurch gekennzeichnet, dass** Rahmen (4) mit Fächer bildenden Stäben (5) aus einer rechteckigen Form in eine parallelogrammartige Form und wieder zurück in die rechteckige Form verstellbar sind.

## Claims

1. Device with compartments for the accommodation of plate-like objects, such as glass panes, with rods (5) that form compartments and arranged in frames (4) and are parallel to one another, and with a base rack (2), on which the frames (4) with rods (5) that form compartments are arranged projecting upward in the position of use, wherein at least several of the frames (4) with the rods (5) that form compartments are oriented obliquely with respect to the base rack (2), and wherein at least one of the frames (4) with rods (5) that form compartments is mounted on the base rack (2) in a pivotable manner, **characterized in that** the rods (5) that form compartments are tilted relative to planes that are perpendicular to the plane of the base rack (2) and run crosswise to the frame (4) with rods (5) that form compartments, and encompass acute angles (α) with the axis (8) around which the frames (4) can be pivoted.

2. Device according to claim 1, **characterized in that** the axis (8), around which the at least one frame (4) with rods (5) that form compartments can pivot, lies in the area of the base rack (2).

3. Device according to claim 1 or 2, **characterized in that** frames (4) with rods (5) that form compartments can be pivoted independently of one another.

4. Device according to any one of claims 1 to 3, **characterized in that** the at least one frame (4) with rods (5) that form compartments can be attached in predetermined positions.

5. Device according to any one of claims 1 to 4, **characterized in that** the at least one frame (4) with rods (5) that form compartments is coupled to an adjustment drive.

6. Device according to any one of claims 1 to 5, **characterized in that** two or more than two frames (4) with rods (5) that form compartments can be pivoted by the same angles.

7. Device according to claim 6, **characterized in that** the frames (4) with rods (5) that form compartments are coupled to a common adjustment drive.

8. Device according to any one of claims 1 to 5, **characterized in that** two or more than two frames (4) with rods (5) that form compartments can be pivoted by angles that are different from one another.

9. Device according to any one of claims 1 to 8, **characterized in that** wheels or rollers, in particular castors (3), are provided on the base rack (2) on its lower side, in the position of use, opposite to the frames (4) with rods (5) that form compartments.

10. Device according to any one of claims 1 to 9, **characterized in that** two or more than two frames (4) are provided with compartment-forming rods (5) which are oriented to the base rack (2) in an oblique manner toward different sides.

11. Device according to any one of claims 1 to 10, **characterized in that** the rods (5) that form compartments are sliding rods.

12. Device according to any one of claims 1 to 11, **characterized in that** the rods (5) that form compartments can be switched between a position, in which they are oriented in a perpendicular manner with respect to the axis (8) around which frames (4) with rods (5) that form compartments can be pivoted, and a position in which the rods (5) that form compartments are tilted with respect to the axis (8) around which frames (4) with rods (5) that form compartments can be pivoted.

13. Device according to any one of claims 1 to 12, **characterized in that** frames (4) with rods (5) that form compartments can be switched from a rectangular shape into a parallelogram-like shape and back again into the rectangular shape.

## Revendications

1. Dispositif, doté de compartiments, destiné à recevoir des objets en forme de plaques, comme des vitres, avec des barres (5) formant des compartiments, parallèles les unes des autres, placées dans des cadres (4) et avec un châssis de base (2) sur lequel, dans la position d'utilisation, les cadres (4) avec les barres (5) formant des compartiments sont placés en débordant vers le dessus, au moins certains des cadres (4) étant orientés avec les barres (5) formant les compartiments en diagonale par rapport au châssis de base (2) et au moins l'un des cadres (4) avec des barres (5) formant les compartiments étant logé en étant pivotant sur le châssis de base (2), **caractérisé en ce que** par rapport à des plans perpendiculaires au plan du châssis de base (2) qui s'étendent à la transversale par rapport au cadre (4) avec des barres (5) formant des compartiments, les barres (5) formant les compartiments sont posées en diagonale et forment des angles aigus (α) avec l'axe (8) autour duquel des cadres (4) peuvent pivoter.

2. Dispositif selon la revendication 1, **caractérisé en ce que** l'axe (8) autour duquel l'au moins un cadre (4) avec des barres (5) formant des compartiments peut pivoter se situe dans la région du châssis de base (2).

3. Dispositif selon la revendication 1 ou la revendication 2, **caractérisé en ce que** des cadres (4) avec des barres (5) formant des compartiments peuvent pivoter indépendamment les uns des autres.

4. Dispositif selon l'une quelconque des revendications 1 à 3, **caractérisé en ce que** l'au moins un cadre (4) avec des barres (5) formant des compartiments peut être immobilisé dans des positions prédéfinies.

5. Dispositif selon l'une quelconque des revendications 1 à 4, **caractérisé en ce que** l'au moins un cadre (4) avec des barres (5) formant des compartiments est couplé à un entraînement de réglage.

6. Dispositif selon l'une quelconque des revendications 1 à 5, **caractérisé en ce que** deux ou plus de deux cadres (4) avec des barres (5) formant des compartiments peuvent pivoter autour d'angles identiques.

7. Dispositif selon la revendication 6, **caractérisé en ce que** les cadres (4) avec des barres (5) formant des compartiments sont couplés à un entraînement de réglage commun.

8. Dispositif selon l'une quelconque des revendications 1 à 5, **caractérisé en ce que** deux ou plus de deux cadres (4) avec des barres (5) formant des compartiments peuvent pivoter autour d'angles différents les uns des autres.

9. Dispositif selon l'une quelconque des revendications 1 à 8, **caractérisé en ce que** sur le châssis de base (2) sur la face inférieure de celui-ci en position d'utilisation qui est opposée aux cadres (4) avec des barres (5) formant des compartiments sont prévu(e)s des roues ou des galets, notamment des galets de guidage (3).

10. Dispositif selon l'une quelconque des revendications 1 à 9, **caractérisé en ce qu'**il est prévu deux ou plus de deux cadres (4) avec des barres (5) formant des compartiments qui sont orientés en diagonales vers différents côtés, en direction du châssis de base (2).

11. Dispositif selon l'une quelconque des revendications 1 à 10, **caractérisé en ce que** les barres (5) formant des compartiments sont des barres coulissantes.

12. Dispositif selon l'une quelconque des revendications 1 à 11, **caractérisé en ce que** les barres (5) formant des compartiments sont réglables entre une position dans laquelle elles sont orientées à la perpendiculaire de l'axe (8) autour duquel des cadres (4) avec des barres (5) formant des compartiments peuvent pivoter et une position dans laquelle les barres (5) formant des compartiments sont à posées à la diagonale par rapport à l'axe (8) autour duquel des cadres (4) avec des barres (5) formant des compartiments peuvent pivoter.

13. Dispositif selon l'une quelconque des revendications 1 à 12, **caractérisé en ce que** des cadres (4) avec des barres (5) formant des compartiments sont réglables d'une forme rectangulaire dans une forme de type parallélogramme et de nouveau en retour dans le forme rectangulaire.
